# EUROPÄISCHE PATENTANMELDUNG

(11) **EP 2 088 053 A2**
(43) Veröffentlichungstag der Anmeldung: **12.08.2009**
(21) Anmeldenummer: 09001608.0
(22) Anmeldetag: 05.02.2009
(51) Int. Cl.: B62B 1/12, B62B 3/02

(54) **Rollkarre mit Trittbrett und veränderbarer Geometrie**

(30) Priorität: 07.02.2008 DE 202008001751 U
(71) Anmelder: EXPRESSO DEUTSCHLAND GMBH, 34123 Kassel (DE)
(72) Erfinder: Tepel, Herbert, 34515 Vöhl-Dorfitter (DE)
(74) Vertreter: Gallo, Wolfgang

(57) **Zusammenfassung**

Rollkarre mit einem aufragenden Gestell (1), an dem Lasttragmittel (12, 13) angeordnet sind und das oben mindestens einen Griffbereich (11) aufweist, und mit zwei unten am Gestell (1) angeordneten Haupträdern (3; 21), wobei die Geometrie der Rollkarre zwischen mindestens zwei Positionen klappbar veränderbar ist, nämlich einer Konfiguration entsprechend einer Rollerfunktion, in welcher die Rollkarre als Tretroller benutzbar ist, klappbar veränderbar ist, und mindestens einer weiteren Konfiguration, in welcher die Rollkarre schieb- oder ziehbar ist, und dass ein Trittbrett (5; 23) vorgesehen ist, dem mindestens ein weiteres Rad (6; 23) zugeordnet ist und das in der Tretrollerfunktion der Rollkarre benutzbar ist.

## Beschreibung

Die Erfindung betrifft eine Rollkarre, die als Mehrzeck-Transportkarre vielfältig einsetzbar ist, sich aber besonders auch für Postzustelldienste eignet.

Zweirädrige Transportkarren als Sack- oder Stapelkarren sind vielfältig bekannt. Sie bestehen aus einem Gestell, das oben mit einem Griffpaar oder Griffbügel ausgebildet ist, unten eine Radachse mit zwei beiderseits angeordneten Rädern trägt, und am Gestellkörper mit festen oder klappbaren Aufstellflächen für Lasten wie Kisten oder Kästen ausgebildet sind und nach Bedarf am aufragenden Gestellteil mit Stäben oder Streben ersehen ist, die ein Anlehnen der Last ermöglichen. Solche bekannten Rollkarren werden vom Benutzer am Griffbereich erfasst und können je nach Beladung oder sonstigen Verhältnissen im mehr oder weniger starker Neigung gerollt werden, wobei auch ein leichtes Rollen über Schwellen, Absätze oder Stufen möglich ist.

Üblicherweise finden derartige Rollkarren zum Transportieren von Lasten auf kurzen Strecken Anwendung, beispielsweise bei Warenlieferungen vom Lkw in ein Gebäude, oder innerhalb von Firmengeländen und dgl.

Aufgabe der Erfindung ist es, eine insbesondere für Postzustelldienste, aber auch für andere Anwendungen geeignete und vielfältiger als bisher bekannte Rollkarren einsetzbare Rollkarre zu schaffen.

Diese Aufgabe wird gemäß der Erfindung durch die im Anspruch 1 angegebene Anordnung gelöst.

Vorteilhafte Ausgestaltungen und Weiterbildungen der Erfindung sind Gegenstand der Unteransprüche.

Das erfindungsgemäße Konzept geht von der bekannten Konstruktion herkömmlicher Rollkarre aus, wie oben erwähnt, also von einer zweirädrigen Rollkarre mit aufragendem Gestell mit oberen Griffbereich.

Gemäß einer ersten Ausführungsform der Erfindung ist eine solche zweiradrige Rollkarre mit einem klappbaren Trittbrett ausgestattet, das um eine horizontale Achse klappbar mit dem unteren Teil des Gestells verbunden ist und seinerseits an seinem hinteren Ende ein Rad oder vorzugsweise ein Räderpaar aufweist. Bei hochgeklapptem Trittbrett kann die Rollkarre wie eine übliche zweirädrige Rollkarre benutzt und geschoben oder gezogen werden, was bei Postzustellerdiensten dann zweckmäßig ist, wenn in kurzen Abständen häufig Gehsteigkanten überwunden werden müssen oder Schwellen oder einzelne Stufen bei Grundstückseingängen oder Gartenwegen zwischen Straße und Hauseingang. Bei heruntergeklapptem Trittbrett kann der Benutzer die Rollkarre wie einen Tretroller benutzen und sich damit schneller und leichter fortbewegen als beim bloßen Schieben oder Ziehen der Karre.

Bei heruntergeklapptem Trittbrett kann die Karre auch wie ein Wagen benutzt werden, kann also durch einfaches Ziehen oder Schieben bewegt werden, braucht zum Rollen nicht in irgendeiner Weise gekippt gehalten zu werden, und hat einen stabilen Stand auf drei oder vier Rädern. Dabei kann das Trittbrett bei Bedarf auch als zusätzliche Ladefläche benutzt werden.

Vorteilhaft ist es dabei, wenn der den oberen Teil des Gestells bildende Griffbügel oder Griffbereich so umklappbar ist, dass vorne und hinten an der Rollkarre vertauscht werden kann, also der Griffbügel oder Griffbereich auf die vom Trittbrett entgegengesetzte Seite geklappt werden kann, um die Karre nach Art eines Wagens zu benutzen, oder auf die selbe Seite wie das Trittbrett geklappt werden kann, um die Rollerfunktion nutzbar zu machen.

Damit die Rollkarre mit heruntergeklapptem Trittbrett noch besser als Roller benutzt werden kann, ist vorzugsweise das Trittbrett außerdem um eine Hochachse drehbar mit dem Karrengestell verbunden, so dass sich daraus eine Lenkbarkeit bei der Benutzung als Roller ergibt.

Zur Verwendung als Postzustellkarre oder für ähnliche Anwendungen ist das Gestell zweckmäßigerweise mit einer Mehrzahl von übereinander und vorzugsweise gestaffelt angeordneter Aufstellplattformen, Körben oder dgl. ausgestattet.

Gemäß weiterer Ausführungsformen der Erfindung ist eine Rollkarre als zweiachsige und vorzugsweise vierrädrige Rollkarre ausgebildet, deren Geometrie klappbar mindestens zwischen einer Rollerposition und einer Wagenposition veränderbar ist.

Einige Ausführungsbeispiele der Erfindung werden nachstehend unter Bezugnahme auf die anliegenden Zeichnungen mehr im einzelnen beschrieben. In den Zeichnungen zeigt:
- Fig. 1: eine Rollkarre nach einer ersten Ausführungs- form der Erfindung in perspektivischer An- sicht,
- Fig. 2: die Rollkarre nach Fig. 1 in Seitenansicht,
- Fig. 3: eine Seitenansicht ähnlich Fig. 2 bei heruntergeklapptem Trittbrett und umge- klapptem Griffbügel,
- Fig. 4: eine perspektivische Ansicht der Rollkarre in der in Fig. 3 gezeigten Stellung,
- Fig. 5: eine Draufsicht auf die Rollkarre mit Dar- stellung der Lenkmöglichkeit,
- Fig. 6: eine perspektivische Darstellung der Roll- karre mit Darstellung der Lenkmöglichkeit,
- Fig. 7: eine zweite Ausführungsform einer Rollkarre nach der Erfindung in Seitenansicht in der Rol- lerstellung,
- Fig. 8: die Rollkarre nach Fig. 7 in Rückansicht,
- Fig. 9: die Rollkarre nach den Figuren 7 und 8 in Draufsicht
- Fig. 10: eine Seitenansicht ähnlich Fig. 7, jedoch bei in die Wagenposition geklappter Rollkarre,
- Fig. 11: eine dritte Ausführungsform der Rollkarre in perspektivischer Ansicht in der Rollerposition,
- Fig. 12: die in Fig. 11 gezeigte Rollkarre in Seitenan- sicht,
- Fig. 13: die Rollkarre nach den Figuren 11 und 12 in der Rollerposition in Draufsicht,
- Fig. 14: die Rollkarre nach den Figuren 11 bis 13 in der Wagenposition,
- Fig. 15: die Rollkarre nach den Figuren 1 bis 14 in ei ner Kompaktposition.

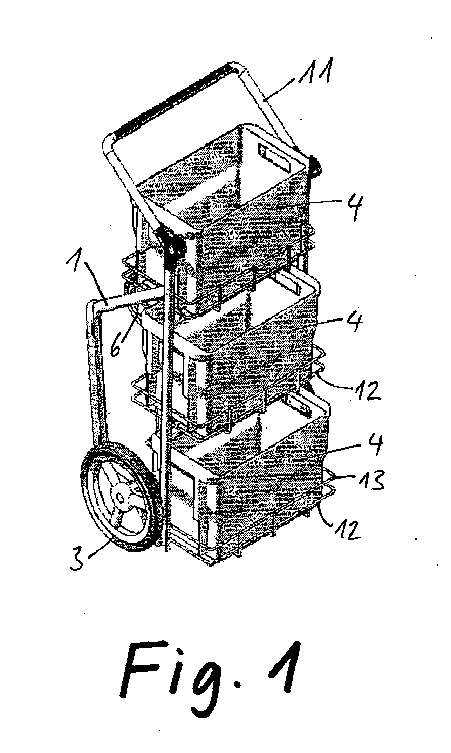

Fig. 1 zeigt eine erste Ausführungsform einer erfindungsgemäßen Rollkarre in perspektivischer Ansicht schräg von vorn. Sie besteht aus einem Gestell 1 mit einem oberen Griffbügel 11 und zwei beiderseits unten angeordneten Rädern 3. An dem Gestell sind bei diesem Ausführungsbeispiel drei übereinander und in Vorwärts-Rückwärts-Richtung leicht gestaffelte Plattformen 12 gebildet, die jeweils von einem niedrigen Gitter 13 umgeben sind und zum Einstellen von Kisten 4 oder Körben dienen, bei denen es sich beispielsweise um Postkörbe für die Verwendung der Karre als Postzustellkarre handeln kann.

Es versteht sich, dass statt der Plattformen 12 auch Körbe oder Kästen am Gestell eingebaut sein können, oder dass am Gestell Vorkehrungen zum Einhängen von Körben oder Kästen vorgesehen sein können.

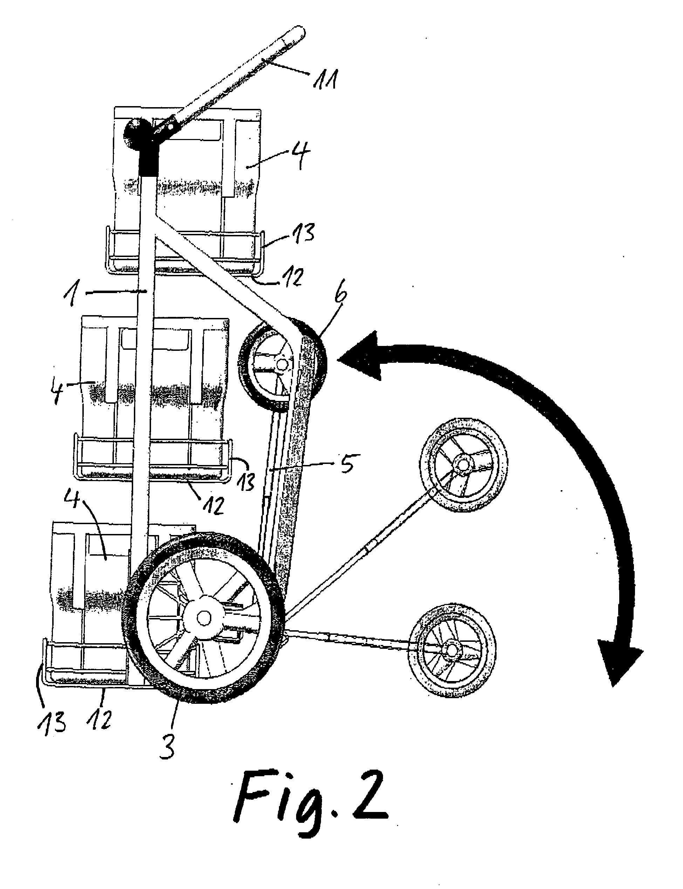

Fig. 2 zeigt die Karre nach Fig. 1 in Seitenansicht. Aus der Seitenansicht ist besser erkennbar, dass die Karre an ihrer Rückseite mit einem auf- und hezunterklappbaren Trittbrett 5 ausgebildet ist, das hinten mit einem Räderpaar 6 ausgestattet ist. Statt des Räderpaars 6 kann auch ein Einzelrad vorgesehen sein, das gegebenenfalls auch um eine Hochachse drehbar sein kann.

Damit es hoch- und heruntergeklappt werden kann, wie der Doppelpfeil in Fig. 2 und die Darstellung des Trittbretts 5 mit dem hinteren Räderpaar 6 in verschiedenen Schwenkpositionen zeigt, ist das Trittbrett 5 am Gestell 1 über ein entsprechendes Gelenk mit horizontaler Scharnierachse angelenkt. Die Anordnung ist so getroffen, dass das Trittbrett 5 in seiner hochgeklappten Stellung stabil verbleibt, indem eine Rastarretierung oder ein entsprechender Federmechanismus vorgesehen ist, derart, dass beim Hoch- und Herunterklappen jeweils durch Bewegung des Trittbretts nur ein Neutralpunkt durchlaufen werden muß, jenseits dessen das Trittbrett in seiner hochgeklappten oder heruntergeklappten Stellung stabil bleibt.

Das Trittbrett 6, das vorzugsweise nicht zu schmal, sondern eher breit ausgebildet ist, kann vom Benutzer je nach Bedarf als Trittbrett benutzt werden, damit es sich mit der Karre nach Art eines Rollers fortbewegen kann, oder das Trittbrett kann auch als zusätzliche Ladefläche benutzt werden.

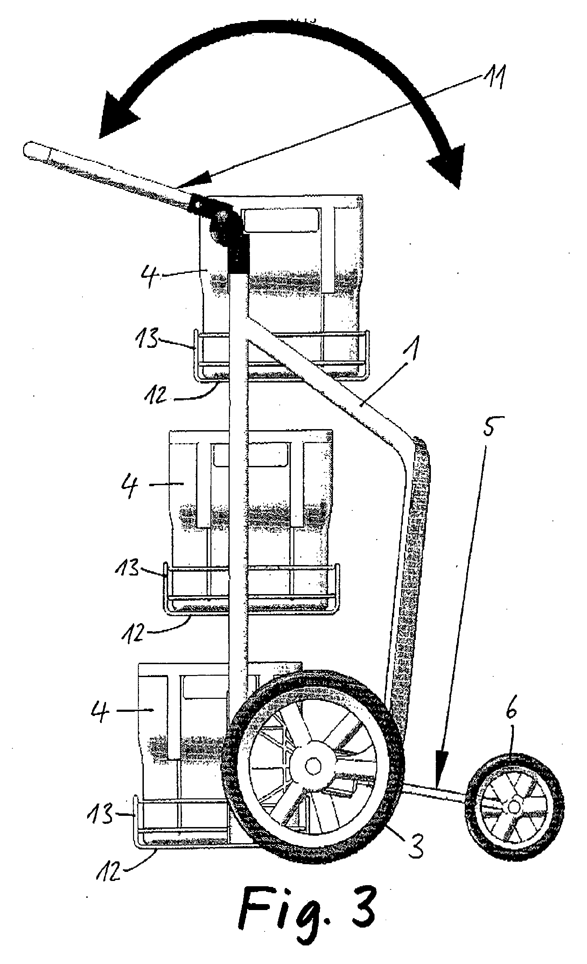

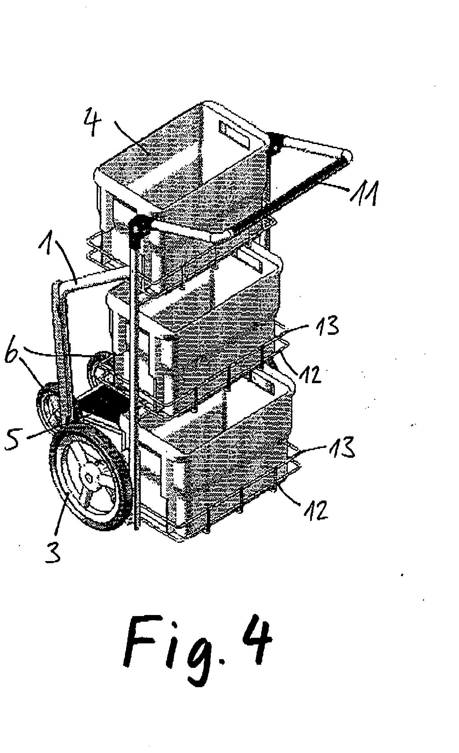

Abgesehen davon kann, wie die Fig. 3 (Seitenansicht) und 4 (perspektivische Ansicht) zeigen, die Karre bei heruntergeklapptem Trittbrett auch nach Art eines Rollwagens benutzt werden, die Karre zum Fahren also nicht, wie bei einer üblichen zweirädrigen Stapelkarre, mindestens leicht angekippt werden muß, sondern einfach nur geschoben oder gezogen werden kann und dabei und im Stillstand auch jeweils einen stabilen Stand hat. Damit diese Benutzung bequem möglich ist, ist der Griffbügel 2, wie der Doppelpfeil in Fig. 3 zeigt, nach der einen oder anderen Seite einer vertikalen Gestellebene umklappbar. Damit kann vorne und hinten an der Karre vertauscht werden. Die Fig. 1 und 2 zeigen die eine Stellung und die Fig. 3 und 4 die andere Stellung des Griffbügels 2.

Es versteht sich, dass für die Wagenfunktion zweckmäßigerweise eine Arretierung, beispielsweise durch eine Rastung oder eine wahlweise zu betätigende starre Arretierung, das Trittbrett 5 in seine heruntergeklappte Position festgelegt werden kann.

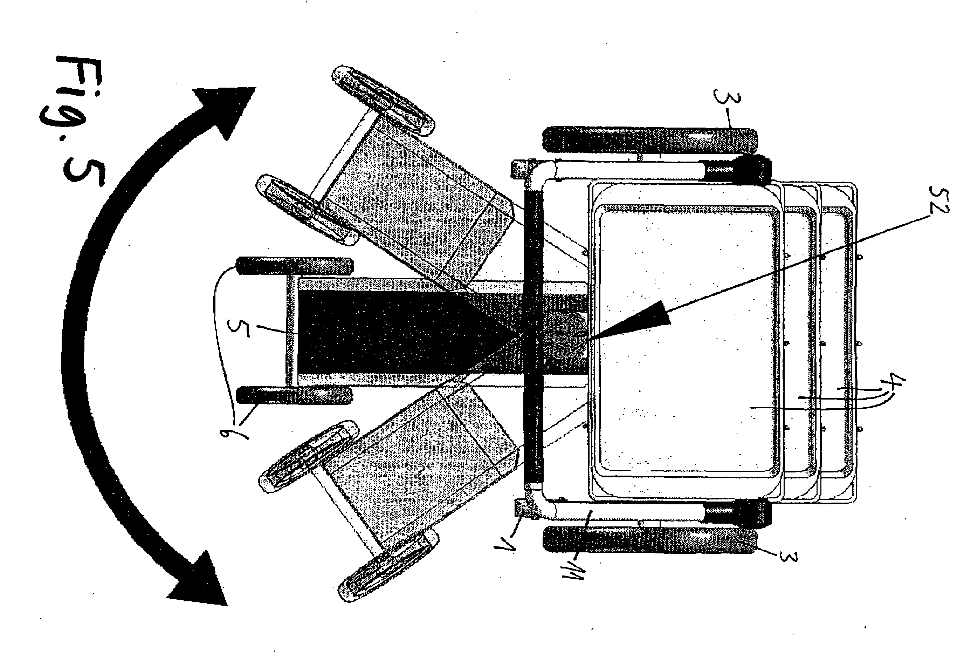

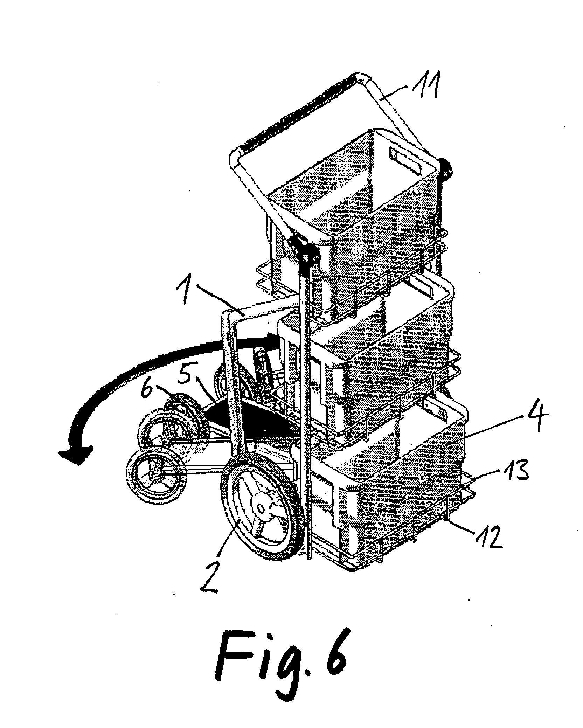

Die Fig. 5 und 6 zeigen in Draufsicht bzw. in perspektivischer Darstellung, dass das Trittbrett 5 außer über das Schamiergelenk mit horizontaler Scharnierachse auch noch über ein Drehgelenk 52 mit Hochachse mit dem Gestell 1 verbunden ist, so dass das Trittbrett 5, wie die Doppelpfeile in den Fig. 5 und 6 zeigen, mit Bezug auf das Gestell 1 nach links und rechts ausschwenkbar ist, so dass bei Benutzung der Karre in der Rollerfunktion ein Lenken möglich ist.

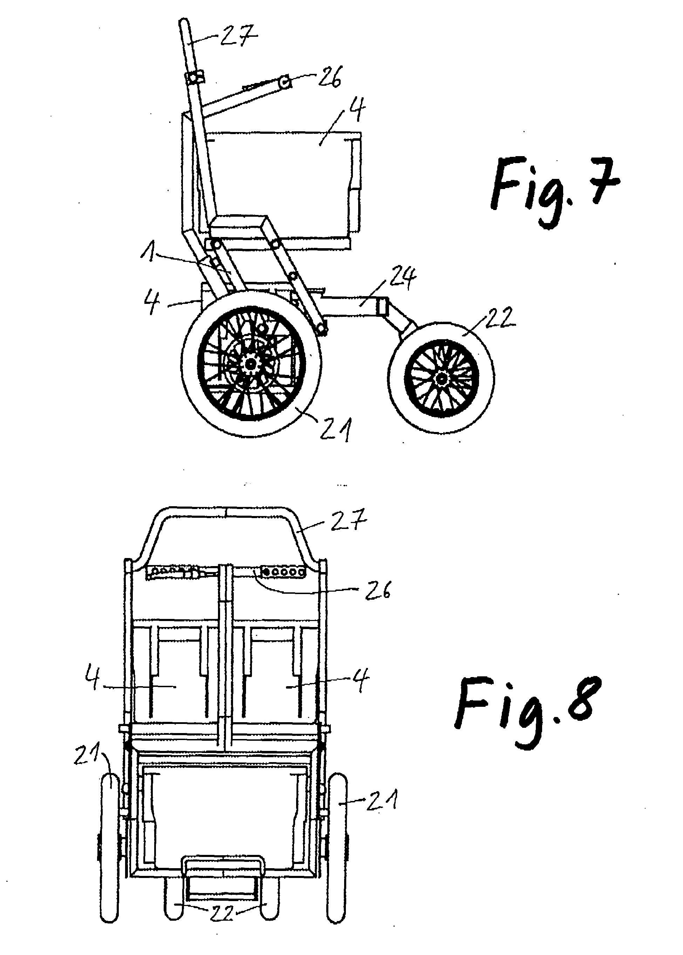

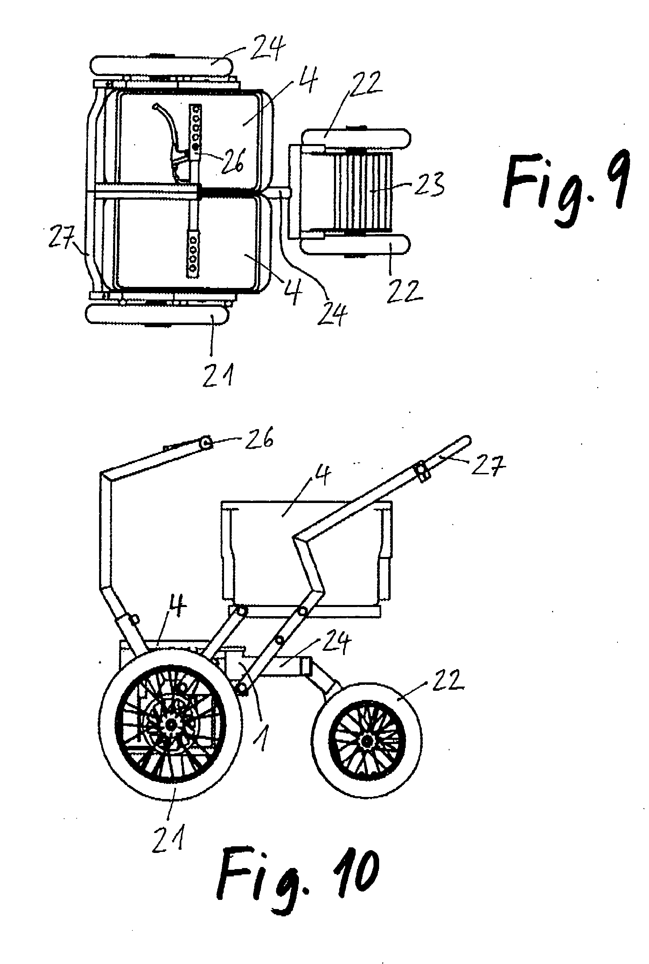

Die Figuren 7 bis 10 zeigen eine zweite Ausfülitungsform einer Rollkarre nach der Erfindung, die zweiachsig ausgebildet ist und zwischen einer Tretrollerfunktion (Figuren 7 bis 9) und einer Wagenfunktion (Fig. 10) veränderbar ist.

Bei dieser zweiten Ausführungsform hat die Rollkarre zweiständig am Boden befindliche Achsen, nämlich eine vordere breitere Achse mit zwei größeren Rädern 21 und eine schmalere Hinterachse mit zwei kleineren Rädern 22. Wie man aus der Draufsicht sieht, ist die vordere Achse mit den größeren Rädern 21 dem Gestell 1 zugeordnet, dass wiederum mehrere Körbe 4 tragen kann.

Zwischen den.beiden kleineren hinteren Rädern 22 ist ein Trittbrett 23 fest angeordnet, und diese aus hinterer Achse mit hinteren Rädern 22 und Trittbrett 23 gebildete Einheit (Hinterachseneinheit) ist mit einer Deichsel 24 an das Gestell 1 angehängt, so dass diese Einheit um eine Hochachse gelenkig mit dem Gestell 1 verbunden ist.

An dem Gestell 1 fest angeordnet ist ein Holm 25 mit einer Griffstange 26, die dann benutzt wird, wenn die Rollkarre sich in der Rollerposition befindet, wo sie wie ein Tretroller benutzt werden kann. Diese Tretrollerfunktion ermöglicht einen Kraft sparenden Transport durch mit einem Bein abstoßende Bewegungen, und ein relativ flottes Fahren, und eignet sich bei ebenem und leicht abfallendem Wegverlauf.

Weiter hat diese zweite Ausführungsform einen Klappbügel 27, der, wie aus Fig. 7 ersichtlich ist, in der Rollerposition der Karre nach vorne geklappt ist, so dass er die Tretrollerfunktion und die Benutzung der Griffstange 26 nicht beeinträchtigt. Um die Rollkarre als Wagen zu benutzen, wird dieser Bügel 27 nach hinten in die in Fig. 10 gezeigte Position geschwenkt, womit auch das Gestell 1 mit dem oberen Korb 4 nach rückwärts geschwenkt wird. Das Gewicht ist damit gegenüber der Verteilung in der Rollerposition nach hinten verlagert, und damit gleichmäßiger verteilt, da in der Wagenposition das Trittbrett 23 ja nicht belastet ist. Die Rollkarre lässt sich in dieser Wagenposition nun mit dem Bügel 27 vom Benutzer bequem schieben oder ziehen.

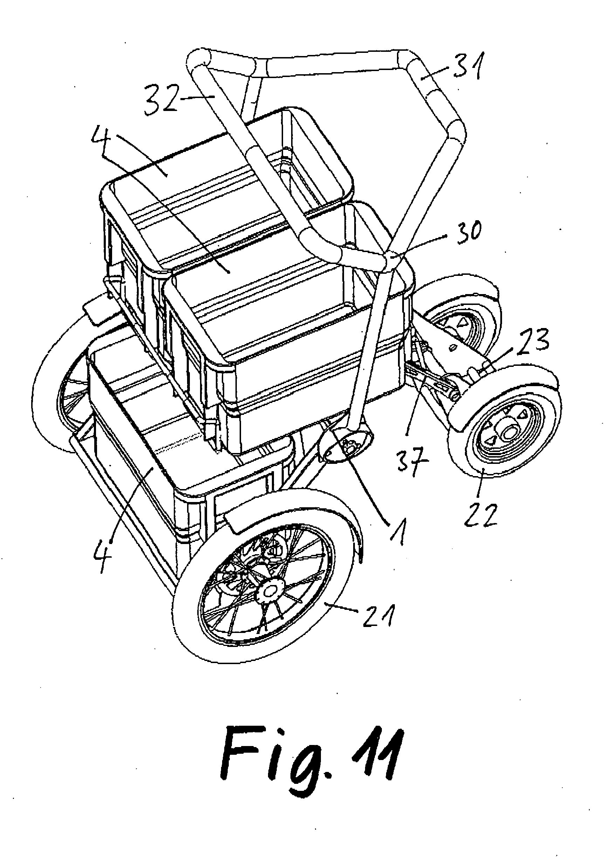

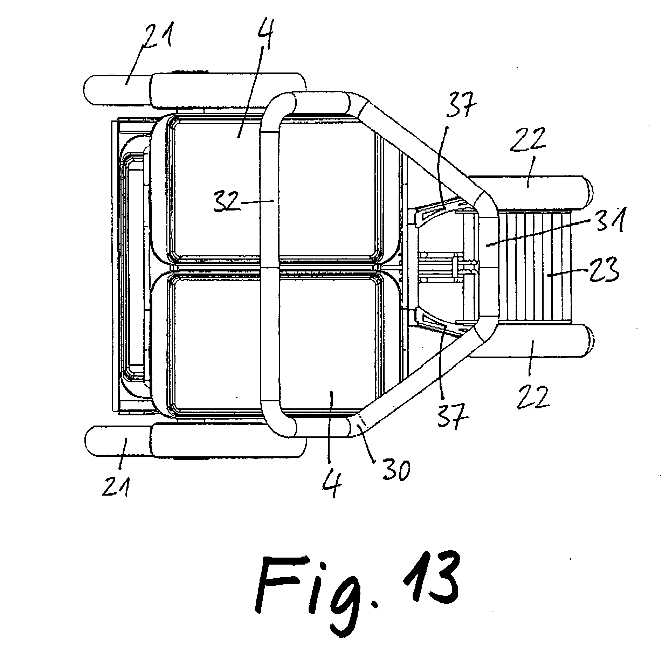

Eine dritte Ausrührungsform ist in den Figuren 11 bis 15 dargestellt.

Die in den Figuren 11 bis 15 dargestellte dritte Ausführungsform ist in soweit der zweiten Ausführungsform nach den Figuren 7 bis 10 ähnlich, als sie eine breitere vordere Achse mit zwei größeren Rädern 21 und eine schmalere hintere Achse mit kleineren Rädern 22 und ein zwischen den beiden hinteren Rädern 22 angeordnetes Trittbrett 23 hat.

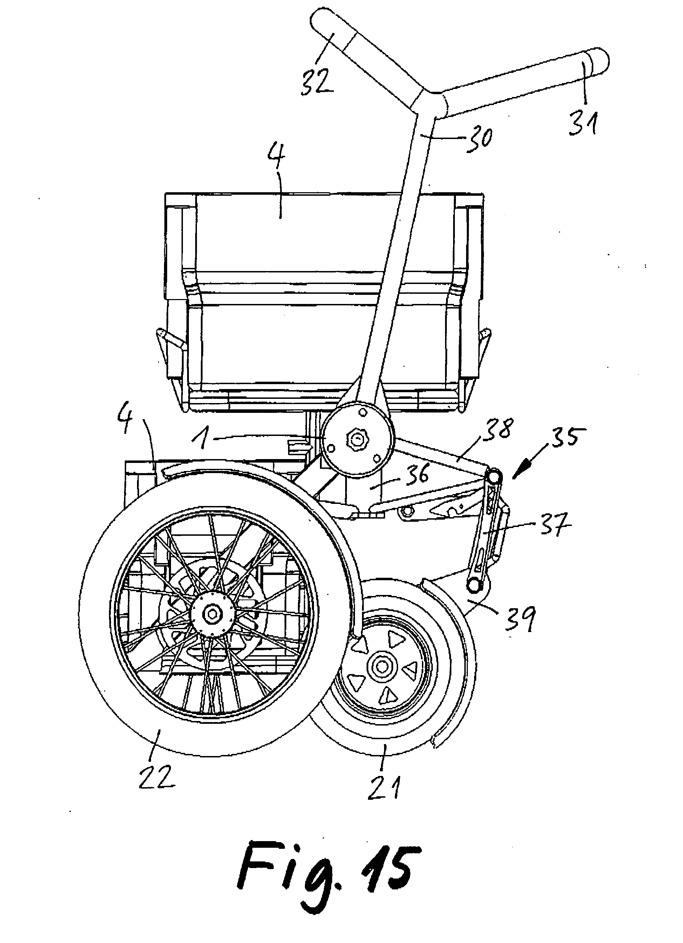

Diese dritte Ausführungsform verfügt allerdings zusätzlich zu der Rollerposition und der Wagenposition, die auch bei der zweiten Ausführungsform vorhanden sind, noch über eine dritte Position, nämlich eine besonders kompakte Konfiguration, die in Fig. 15 dargestellt ist, und die das Handhaben der Rollkarre auf beengten Räumen oder beim Manövrieren über Treppen erleichtert.

Bei dieser dritten Ausführungsform ist eine Griffbügelanordnung 30 am Gestell 1 angebracht, die in allen drei Betriebspositionen der Rollkarre die gleiche Stellung hat, und die als Doppelgriffbügelanordnung mit einem nach hinten weisenden Griffbügel 31 und einen nach vorne weisenden Griffbügel 32 ausgebildet ist. Normalerweise dient der nach hinten weisende Griffbügel 31 zur Handhabung der Karre, aber gerade in der in Fig. 15 gezeigten Karrenposition ermöglicht der nach vorne weisende Griffbügel 32 eine zweckmäßige Handhabung der Karre auf beengten Räumen insbesondere zum Transport über Treppen oder Stufen, wo dann die Karre etwas angekippt und mit den vorderen größeren Rädern 21 relativ leicht über Stufen oder Treppen manövriert werden kann.

Um die Verstellbarkeit der in den Figuren 11 bis 15 dargestellten dritten Ausführungsform in die drei genannten Betriebspositionen zu ermöglichen, ist die aus den hinteren Rädern 22 und dem zwischen diesen angeordneten Trittbrett 23 gebildete Hinterachseinheit über einen klappbaren Gestängemechanismus 35 mit dem übrigen Gestell 1 verbunden. Es versteht sich, dass dieser Gestängemechanismus 35 in den verschiedenen Positionen rastbar ist.

Die Figuren 11 bis 13 zeigen den Gestängemechanismus 3 5 in seiner nach rückwärts gestreckten Stellung entsprechend der Rollerposition der Karre. Da befinden sich die hinteren Räder 21 relativ weit hinten, das zwischen ihnen angeordnete Trittbrett 23 kann benutzt werden, und dabei kann der Benutzer am hinteren Griffbügel 31 festhalten. Der Gestängemechanismus 35 ist außerdem über ein Drehgelenk 36 über eine Hochachse schwenkbar mit dem übrigen Gestell 1 verbunden, so dass die Rollkarre in der Rollerposition lenkbar ist.

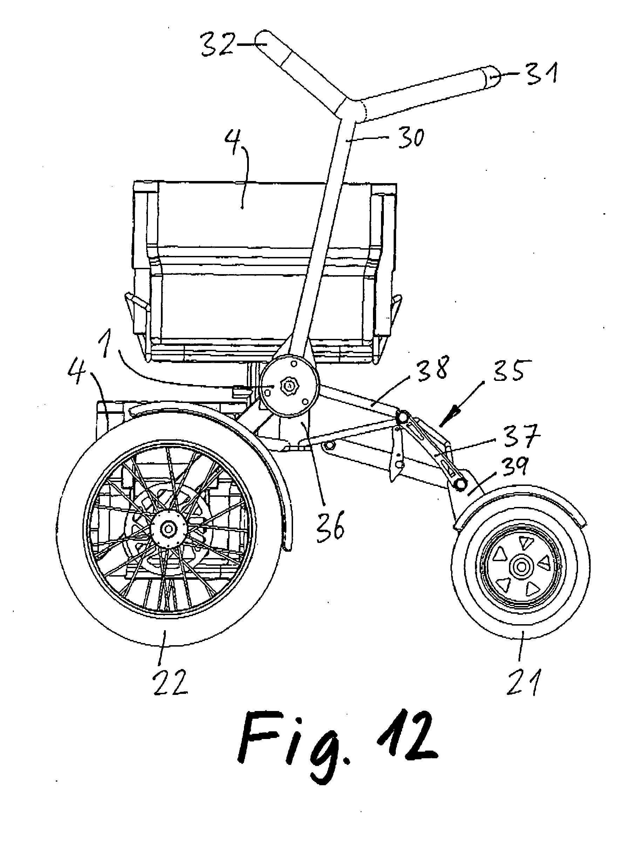

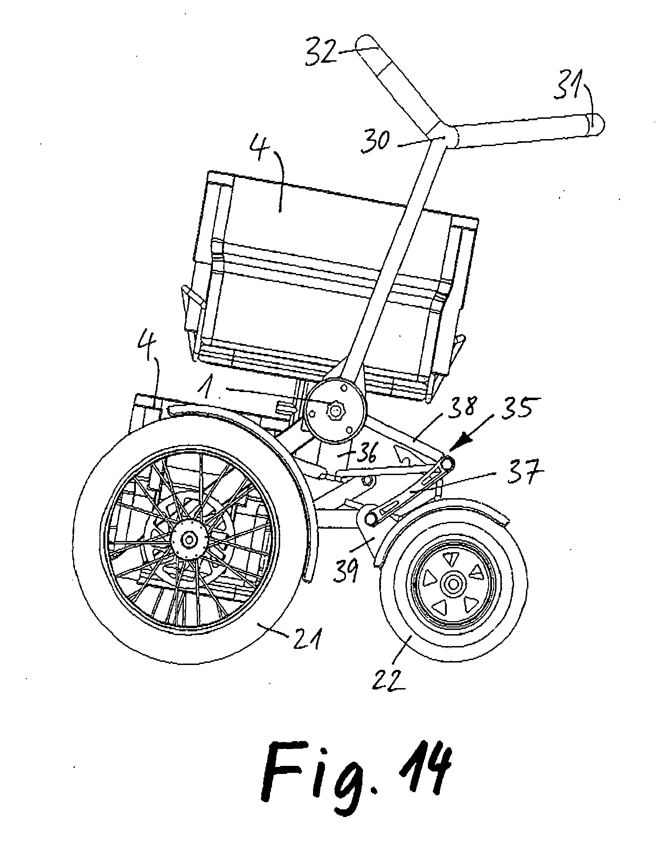

In der Fig. 14 dargestellten Wagenposition ist der Gestängemechanismus so umgeklappt, dass die hintere Achse mit den hinteren Rädern 21 nach vorne näher zur vorderen Achse hin verschoben ist. Dabei sind zwei beiderseitige Lenker 37, die eine Doppelgelenkverbindung zwischen starren Streben 38 und einem Rahmenteil 39 der Hinterachseinheit bilden, und die in der Rollerposition (siehe insbesondere Fig. 12) eine nahezu nach rückwärts gestreckte Anordnung mit den starren Streben 38 bilden, nunmehr (siehe Fig. 14) nach vorne geschwenkt, so dass die Hinterachseinheit mit den hinteren Rädern 21 und dem dazwischen liegenden Trittbrett 23 ohne Veränderung ihrer Orientierung weiter nach vorne verschoben ist, und die Lenker 37 nun nach vorne weisen. Das Trittbrett 23 kann nun nicht mehr als solches benutzt werden, und die Rollkarre ist nun nach Art eines Wagens bequem unter Verwendung des nach rückwärts ragenden Griffbügels 31 schieb- und ziehbar, ohne dass die Hinterachseinheit dabei im Weg ist und der Benutzer die Gefahr läuft, über die Hinterachseinheit zu stolpern.

Bei der in Fig. 15 gezeigten Karrenposition ist der Gestängemechanismus in eine Position gebracht, in welcher die Lenker 37 nahezu vertikal stehen und die Hinterachseinheit um einen gewissen Winkel nach rückwärts um ihre Achse geschwenkt und noch weiter nach vorne verschoben ist, so dass die Hinterachseinheit sich teilweise zwischen den vorderen Rädern 21 befindet, die einen größeren Abstand als die hinteren Räder 22 haben. In dieser Position ist die Karre also etwas nach vorne gekippt, so dass sich auch der vordere Griffbügel 32 etwas weiter vorne als in den übrigen Positionen befindet. Die Rollkarre ist nun wie Fig. 15 zeigt, sehr kompakt und kurz, so dass sie auf sehr beengtem Raum, zum Beispiel in Hauseingangsfluren, leicht handhabbar ist.

Allen drei Ausführungsformen ist gemeinsam, dass das Klappen von einer Position in eine andere Position sehr schnell und einfach vonstatten geht, ohne das die auf der Rollkarre beförderte Last dabei hinderlich ist. Dies beruht auch bei den Ausführungsformen nach den Figuren 7 bis 15 darauf, dass die Last der Beladung hauptsächlich auf die vordere Achse mit den großen Rädern 21 wirkt.

Bei allen Ausführungsformen ist das Trittbrett sehr tief liegend angeordnet, was möglich ist, weil es zwischen den beiden hinteren Rädern angeordnet ist, und das ist ergonomisch besonders günstig.

Vorzugsweise ist die Rollkarre mit einer kombinierten Fahr- und Feststellbremse ausgestattet, die auf die vorderen Räder wirkt. Dies ist der Übersichtlichkeit halber in den Zeichnungen nicht dargestellt. Außerdem können gegebenenfalls zusätzliche ausklappbare Steig- und Ankipphilfen vorgesehen sein, um die Karre, insbesondere zum Überwinden von Hindernissen wie Stufen und Treppen, noch leichter ankippen zu können. Solche Ankipphilfen sind an sich bekannt und sind deshalb nicht dargestellt.

Des weiteren kann die Rollkarre nach der zweiten und dritten Ausführungsform noch dafür ausgebildet sein, als Anhänger oder als Glied einer Wagenkette eingesetzt zu werden, beispielsweise um die Karren einzeln oder mehrere zusammen zwischen einem Depot und einer Belade- oder Ausgangsstation transportieren zu können.

## Patentansprüche

1. Rollkarre mit einem aufragenden Gestell (1), an dem Lasttragmittel (12, 13) angeordnet sind und das oben mindestens einen Griffbereich (11) aufweist, und mit zwei unten am Gestell (1) angeordneten Haupträdern (3; 21),
**dadurch gekennzeichnet, dass** die Geometrie der Rollkarre zwischen mindestens zwei Positionen klappbar veränderbar ist, nämlich einer Konfiguration entsprechend einer Rollerfunktion, in welcher die Rollkarre als Tretroller benutzbar ist, klappbar veränderbar ist, und mindestens einer weiteren Konfiguration, in welcher die Rollkarre schieb- oder ziehbar ist, und dass ein Trittbrett (5; 23) vorgesehen ist, dem mindestens ein weiteres Rad (6; 23) zugeordnet ist und das in der Tretrollerfunktion der Rollkarre benutzbar ist.

2. Rollkarre nach Anspruch 1, wobei das Trittbrett (5) über ein Scharniergelenk zwischen einer hochgeklappten und einer heruntergeklappten Stellung bewegbar ist, und wobei das mindestens eine weitere Rad (6) im Bereich des hinteren Endes des Trittbretts (5) angeordnet ist.

3. Rollkarre nach Anspruch 2, wobei das Trittbrett (5) außerdem über ein Drehgelenk (52) mit Hochachse mit dem Gestell (1) verbunden ist.

4. Rollkarre nach einem der Ansprüche 1 bis 3, wobei der Griffbereich (11) des Gestells (1) zwischen einer auf die Seite der Anordnung des Trittbretts am Gestell geklappten Position und einer auf die entgegengesetzte Seite des Gestells geklappten Position verstellbar ist.

5. Rollkarre nach einem der Ansprüche 1 bis 4, wobei die Lasttragmittel mehrere übereinander und gestaffelt angeordnete Plattformen (12), Kästen oder Körbe (4) oder Einhängevorrichtungen für Kästen oder Körbe umfassen.

6. Rollkarre nach einem der Ansprüche 1 bis 5, wobei das Trittbrett (5; 23) zwischen zwei weiteren Rädern (6; 22) angeordnet ist.

7. Rollkarre nach Anspruch 1, wobei das Trittbrett (23) zwischen zwei weiteren Rädern (22) angeordnet ist und mit diesen zusammen eine Hinterachseinheit bildet.

8. Rollkarre nach Anspruch 7, wobei die Hinterachseinheit (22, 23) über eine Deichsel (24) und ein Gelenk mit Hochachse mit dem Gestell (1) verbunden ist.

9. Rollkarre nach Anspruch 7 oder 8, wobei der Griffbereich durch einen klappbaren Griffbügel (27) gebildet ist, der zwischen einer vorderen Position bei Benutzung der Rollkarre in der Tretrollerfunktion und einer hinteren Position zur Benutzung der Rollkarre in der Wagenfunktion schwenkbar ist, wobei in der Tretrollerfunktion der in die vordere Position geschwenkte Griffbügel (27) oder ein zusätzlich vorgesehener feststehender Griffbereich (26) benutzt werden kann.

10. Rollkarre nach Anspruch 9, wobei der Griffbügel (27) mit einem ebenfalls schwenkbaren Teil des Gestells (1) verbunden ist, das beim Schwenken des Griffbügels (27) ebenfalls zwischen einer vorderen und einer hinteren Position geschwenkt wird.

11. Rollkarre nach Anspruch 7, wobei die Hinterachseinheit mit dem Gestell (1) über einen Gestängemechanismus (35) verbunden ist, der Lenker (37) umfasst, über welche die Hinterachseinheit (22, 23) zwischen einer hinteren, der Tretrollerfunktion der Rollkarre entsprechenden Position, in welcher die Lenker (37) nach hinten weisen, und einer nach vorne näher zu den Haupträdern (21) verschobenen Position entsprechend der Wagenfunktion der Rollkarre klappbar sind, in welcher die Lenker (37) nach vorne weisen.

12. Rollkarre nach Anspruch 11, wobei der Gestängemechanismus (35) das Klappen der Hinterachseinheit (22, 23) in eine noch weiter nach vorne geschobene Position entsprechend einer Kompaktgeometrie der Rollkarre klappbar ist, in welcher die Lenker (37) in etwa senkrechter oder steiler Position stehen und die Zusatzräder (22) teilweise zwischen die mit entsprechend großem Abstand angeordneten Haupträder (21) greifen.
